# FASCICULE DE BREVET EUROPEEN

(11) **EP 3 154 768 B1**
(45) Date de publication et mention de la délivrance du brevet: **15.08.2018**
(21) Numéro de dépôt: 15729409.1
(22) Date de dépôt: 10.06.2015
(51) Int. Cl.: B29C 65/64, B29C 65/48, B29C 65/70, B29C 45/14, B29C 65/50, B29C 65/72, B29C 65/02, B29L 31/30, B29L 31/00

(54) **PROCÉDÉ D'ASSEMBLAGE ET ENSEMBLE MÉTAL - COMPOSITE**
METALL-VERBUNDWERKSTOFFMONTAGESVERFAHREN UND ZUSAMMENBAU
METAL-COMPOSITE ASSEMBLY METHOD AND ASSEMBLY

(30) Priorité: 10.06.2014 FR 1455251
(43) Date de publication de la demande: 19.04.2017
(73) Titulaire: Institut de Recherche Technologique Jules Verne, 44340 Bouguenais (FR)
(72) Inventeur: ROCHE, Sylvain, F-45290 Varennes - Changy (FR); FACON, Francis, F-27200 Vernon (FR); RENAULT, Thierry, F-27200 Vernon (FR); AUGER, Stéphane, F-44690 Château-Thébaud (FR); CORNU, Christophe, F-85610 Cugand (FR); DALLA-ZUANNA, Cyrille, F-69009 Lyon (FR)
(74) Mandataire: Ipside
(86) Numéro de dépôt international: PCT/EP2015/062882
(87) Numéro de publication internationale: WO 2015/189237

(56) Documents cités:
- EP-A2- 2 669 077
- US-A1- 2008 003 401

## Description

L'invention concerne un procédé et un dispositif pour l'assemblage d'une pièce métallique avec une pièce composite. L'invention est plus particulièrement, mais non exclusivement, dédiée à un assemblage, selon une liaison complète, entre un support constitué d'un matériau composite, notamment renforcé par des fibres continues, et une pièce métallique fonctionnelle, lequel assemblage est sollicité par des sollicitations de cisaillement et plus particulièrement par des sollicitations de torsion.

Certaines fonctions techniques sont difficilement réalisables par la seule mise en oeuvre de pièces constituées d'un matériau composite à matrice polymère. Ainsi, par exemple, les articulations et les rotules entre des pièces structurales, sont préférentiellement réalisées dans un matériau métallique pour des raisons de tribologie, de rendement de l'articulation et de résistance aux phénomènes de dégradation des surfaces chargées, notamment le matage ou l'écaillage. Aussi, des pièces métalliques doivent alors être assemblées avec des pièces composites de structure.

Le document WO 2009 094595 décrit un dispositif pour l'assemblage d'une pièce métallique avec une pièce composite dont l'interface d'assemblage est soumise à des sollicitations de cisaillement. Cette solution technique de l'art antérieur utilise des éléments de liaison en saillie sur la face d'assemblage de la pièce métallique et qui s'enfoncent dans la stratification du matériau composite. Ces éléments en saillie assurent un couplage mécanique de la pièce métallique avec la stratification sur une profondeur de plusieurs plis, évitant ainsi le phénomène de pelage sous l'action des sollicitations d'interface. Ce mode de réalisation de l'art antérieur adapte une technique, connue sous le terme anglo-saxon de « *Z-pinning* », qui consiste à introduire des aiguilles, constituées de métal ou de fibres, perpendiculairement aux couches de plis, sur une profondeur significative de la stratification, lesquelles aiguilles améliorent la résistance de ladite stratification au délaminage. Il s'agit d'aiguilles fines, dont la longueur est de l'ordre de 10 fois le diamètre, et qui sont aptes à s'insérer entre les fibres de renfort sans désorienter celles-ci outre mesure, lesquelles aiguilles doivent être introduites lors du drapage de la pièce composite ou de la préforme correspondant à cette pièce composite, c'est-à-dire avant l'imprégnation des plis de résine ou avant la cuisson/consolidation de la matrice.

La réalisation de la liaison de telles aiguilles avec la pièce métallique est complexe. Ainsi, le document US 5 972 524 préconise l'introduction des aiguilles dans la préforme puis le soudage de la pièce métallique sur lesdites aiguilles.

Les documents EP 1 707 702 et US 4 808 461 préconisent une insertion assistée par ultrasons des aiguilles dans la préforme crue. Le document US2008/0003401 décrit l'assemblage d'une pièce métallique avec une pièce composite en utilisant des éléments de liaison en saillie sur la face d'assemblage de la pièce métallique. Ces modes de réalisation de l'art antérieur nécessitent une pièce composite épaisse ou l'utilisation d'un grand nombre d'aiguilles fines, et ne sont pas compatibles avec une production en série. De plus, lorsque l'interface est sollicitée en cisaillement, lesdites aiguilles tendent à fléchir, de sorte qu'elles favorisent, sous l'effet du cisaillement, le désaccouplement des deux pièces selon une direction perpendiculaire à l'interface. Ainsi, ce type d'assemblage de l'art antérieur, comprend fréquemment deux pièces métalliques prenant en sandwich la pièce composite, et entre lesquelles s'étendent les aiguilles, constituant ainsi une interface double, ce qui augmente la masse du dispositif.

Le document WO 2010 101874 décrit un exemple de liaison entre une pièce composite et une pièce métallique, ledit assemblage faisant partie d'un siège d'un véhicule automobile, étant soumis à des sollicitations de torsion. Selon cet exemple de réalisation, un insert métallique est intégré au moulage dans une pièce, dite intermédiaire, constituée d'un matériau thermoplastique. L'insert métallique comporte sur certaines de ses faces des reliefs favorisant le couplage mécanique entre ledit insert et la pièce intermédiaire. Ladite pièce intermédiaire et la pièce composite sont constituées de polymères aptes à se lier par fusion de sorte que la pièce intermédiaire, comprenant le support métallique, est intimement liée à la pièce composite. La pièce métallique est ensuite fixée, par l'intermédiaire de fixations, au support métallique. La forme des interfaces, sensiblement en forme de U, facilite les transferts de charges et la résistance au délaminage. Cette méthode qui donne satisfaction en utilisation et en production effectives, reste complexe de mise en oeuvre et ses avantages en termes de masse sont limités du fait de la présence de deux pièces métalliques s'étendant sur des distances relativement élevées pour assurer le transfert de charge et la sécurité du dispositif en cas d'accident.

Le document EP 2 669 077 décrit un assemblage entre une pièce composite stratifiée et une pièce métallique, dans lequel la pièce métallique est liée à la pièce métallique lors de la stratification de ladite pièce composite sur la pièce métallique.

L'invention vise à résoudre les inconvénients de l'art antérieur et concerne à cette fin un procédé pour l'assemblage structural d'une première pièce constituée d'un matériau comprenant une matrice polymère avec une seconde pièce de constitution métallique, par deux surfaces en vis-à-vis, dites faces d'assemblage, selon une interface, lequel procédé comporte des étapes consistant à :
a. former sur la face d'assemblage de la pièce métallique une forme, dite forme d'accouplement, comprenant deux motifs distants comportant une extension selon une direction normale à ladite face d'assemblage ;
b. estamper la première pièce avec la seconde pièce sur l'interface d'assemblage alors que la matrice de la première pièce se trouve dans un état non consolidé ;
c. surmouler sur l'assemblage ainsi réalisé une couche, dite de verrouillage, dont la constitution comporte une matrice polymère, ladite couche de verrouillage comprenant une partie en recouvrement sur la première et une partie en recouvrement sur la deuxième pièce et s'opposant au déplacement relatif des deux pièces selon une direction normale à leur interface d'assemblage.

Ainsi, le procédé objet de l'invention est réalisé de manière économique et compatible avec une mise en oeuvre en production de série, par l'assemblage direct de la pièce métallique et de la pièce composite au cours d'une opération d'estampage. Le surmoulage de la couche de verrouillage prévient la désolidarisation des deux pièces selon une direction perpendiculaire à l'interface d'assemblage, notamment lorsque ladite interface est soumise à une sollicitation de torsion ou plus généralement à une sollicitation de cisaillement parallèle à l'interface. Cette disposition permet ainsi d'utiliser des formes d'accouplement moins étendues selon la direction perpendiculaire à ladite interface comparativement aux solutions de type Z-pinning de l'art antérieur.

Dans tout le texte, sauf indication contraire, les termes « direction normale » désignent une direction normale orientée vers l'intérieur ou vers l'extérieur de la surface matérielle.

L'invention est avantageusement mise en oeuvre selon les modes de réalisation exposés ci-après lesquels sont à considérer individuellement ou selon toute combinaison techniquement opérante.

Avantageusement, la forme d'accouplement pénètre dans la première pièce au cours de l'opération d'estampage sans traverser ladite pièce. Ainsi, l'arasage de la forme d'accouplement sur l'autre face de la pièce composite n'est pas nécessaire.

Selon un mode de réalisation du procédé objet de l'invention, l'étape a) comprend une opération de soudage ou d'usinage additif sur la face d'assemblage de la pièce métallique. Ce mode de réalisation permet de créer une texturation en relief de la face d'assemblage selon des motifs élancés aptes à s'insérer entre les fibres de renforts de la première pièce lorsque celle-ci est de nature composite. Les termes « usinage additif » désignent tout procédé permettent de déposer de la matière sur un substrat, notamment, mais non exclusivement, le frittage laser, la projection de poudre en fusion, ou le dépôt stratifié de polymère.

Selon un autre mode de réalisation, compatible avec le précédent, l'étape a) du procédé objet de l'invention comporte une opération de découpage-emboutissage de la pièce métallique. Ce mode de réalisation est particulièrement économique dans le cadre d'une fabrication en grande série.

Avantageusement, le procédé objet de l'invention comprend avant l'étape b) une étape consistant à :
d. interposer une couche adhésive entre les faces d'assemblage des deux pièces.

Ainsi l'adhésif participe à la stabilisation de la pièce métallique par rapport à la première pièce, notamment vis-à-vis du phénomène de désaccouplement desdites pièces, et notamment lorsque le matériau constituant la matrice polymère de la première pièce n'est pas susceptible de coller au métal constituant la deuxième pièce.

Avantageusement, la couche adhésive est de nature à être activée thermiquement et l'étape b) est réalisée par thermo-estampage, la température d'activation de la couche adhésive étant adaptée pour son activation au cours de l'opération de thermo-estampage. Ainsi les opérations de collage et d'estampage sont combinées pour une productivité accrue.

L'invention concerne également un ensemble comprenant une première pièce constituée d'un matériau composite à matrice polymère et une deuxième pièce métallique, assemblées selon des faces, dites d'assemblage, en vis-à-vis selon une interface, dans lequel :
i. la première pièce est constituée d'un composite comprenant des fibres de renfort continues dans une matrice thermoplastique ;
ii. la deuxième pièce comporte, sur sa face d'assemblage, une forme d'accouplement, comprenant une pluralité de motifs, chaque motif étant d'un contour fermé dans un plan parallèle à la face d'assemblage de ladite pièce et s'étendant selon une direction normale à ladite face d'assemblage, le rapport entre l'extension de ce motif selon une direction normale à la face d'assemblage et le diamètre maximal du contour dudit motif dans un plan parallèle à la face d'assemblage étant inférieur à 5.

Le faible élancement des motifs de la forme d'assemblage permet la réalisation de cet ensemble par le procédé économique objet de l'invention, sans risque de flambement desdits motifs lors de l'opération d'estampage. De plus, ce faible élancement limite le phénomène de désaccouplement par la rigidité transversale desdits motifs lorsque l'interface d'assemblage est sollicitée par un cisaillement parallèle à ladite interface.

Avantageusement, la face d'assemblage de la pièce composite est une surface plane. Le dispositif objet de l'invention permet ainsi de constituer une liaison résistant à la torsion dans un encombrement d'épaisseur réduite.

Avantageusement, l'extension des motifs de la forme d'accouplement selon une direction normale à la face d'assemblage de la deuxième pièce, est inférieure à l'épaisseur de la première pièce. Cette configuration est plus particulièrement adaptée à la réalisation de la liaison entre les deux pièces par estampage.

Selon un premier mode de réalisation de l'ensemble objet de l'invention, la face d'assemblage de la deuxième pièce comporte une pluralité de motifs s'étendant vers la première pièce selon une direction normale à ladite face d'assemblage. Ainsi, lesdits motifs interagissent avec les fibres de renfort de la première pièce pour drainer dans ladite pièce les efforts à l'interface.

Selon un deuxième mode de réalisation de l'ensemble objet de l'invention, compatible avec le mode de réalisation ci-avant, la face d'assemblage de la deuxième pièce comporte une pluralité de motifs s'étendant vers la deuxième pièce selon une direction normale à ladite face d'assemblage. Ainsi, lors de l'estampage, le polymère constituant la matrice de la première pièce et, le cas échéant, le pli de ladite première pièce se trouvant le plus proche de l'interface d'assemblage, pénètre dans ledit motif. Cette liaison est moins sensible au phénomène de désaccouplement.

Avantageusement, la pluralité de motifs de la face d'assemblage comprend un motif comportant une portion d'arrêt, laquelle portion d'arrêt est prise à l'intérieur de la pièce composite. Ainsi, ladite portion d'arrêt stabilise l'assemblage vis-à-vis du phénomène de désaccouplement et contribue à transférer dans l'épaisseur de la pièce composite les sollicitations normales à l'interface, limitant ainsi les effets de poinçonnement ou de délaminage.

Avantageusement, la face d'assemblage de la deuxième pièce comporte une pluralité de motifs comprenant une ouverture crevant ladite face d'assemblage. Ces motifs permettent de combiner les avantages des modes de réalisation précédents et sont, par ailleurs, réalisables par un procédé de decoupage-emboutissage particulièrement économique pour la production en grande série.

Avantageusement, la face d'assemblage de la deuxième pièce comporte une pluralité de motifs dont la section parallèlement à la face d'assemblage est variable selon une direction normale à ladite face d'assemblage. Ainsi, des fonctions techniques particulières sont intégrées sur la longueur desdits motifs, notamment dans le cas d'un ensemble dans lequel la pluralité de motifs de la face d'assemblage comprend un motif comportant une portion, dite d'arrêt, distante de l'interface d'assemblage qui s'étend selon une direction parallèle à l'interface d'assemblage, laquelle portion est apte à réaliser un arrêt selon une direction normale à ladite interface, en coopération avec la première pièce. Ce type de motif participe à la stabilisation de l'assemblage vis-à-vis du phénomène de désaccouplement.

Dans ce même but, l'ensemble objet de l'invention comprend, selon un mode de réalisation avantageux :
iii. une couche de matière, dite couche de verrouillage, comportant une partie en recouvrement sur la première pièce et une partie en recouvrement sur la deuxième pièce.

Selon un mode de réalisation avantageux, la pièce métallique comporte des moyens aptes à réaliser une liaison avec une troisième pièce relativement à ladite pièce métallique. Plus particulièrement, lesdits moyens sont adaptés pour réaliser une liaison pivot indexable avec ladite troisième pièce.

L'invention concerne également un siège, notamment pour un véhicule, lequel siège comporte un mécanisme comprenant un ensemble selon l'un quelconque des modes et variantes de réalisation précédents. Ainsi, ledit mécanisme est introduit dans une structure composite, que cette structure composite soit celle du siège ou celle du véhicule comprenant ledit siège, en limitant l'apport de masse.

Avantageusement, les moyens de réglage de l'inclinaison du dossier par rapport à l'assise du siège objet de l'invention comportent un ensemble selon l'un quelconque des modes de réalisation exposés ci-avant.

L'invention est exposée ci-après selon ses modes de réalisation préférés, nullement limitatifs, et en référence aux figures 1 à 7 dans lesquelles :
- la figure 1 montre selon une vue en perspective et en éclaté, un exemple de réalisation d'un ensemble selon l'invention, comportant une vue en agrandissement de la face d'assemblage de la deuxième pièce ;
- la figure 2 représente l'assemblage objet de l'invention selon l'exemple de la figure 1 et selon une vue de dessus ;
- la figure 3 montre, selon une vue en coupe, différents exemples de réalisation de motifs ;
- la figure 4 illustre, selon des vues en perspective, figure 4A en éclaté, figure 4B après assemblage, un mode de réalisation de l'ensemble objet de l'invention, dont la réalisation ne nécessite pas la mise en oeuvre d'une opération d'estampage ;
- la figure 5 représente, selon une vue en perspective, un exemple de réalisation d'une pièce métallique d'un ensemble objet de l'invention selon une variante du mode de réalisation représenté figure 4 ;
- la figure 6 est un diagramme illustrant un exemple de réalisation du procédé objet de l'invention ;
- et la figure 7 est une vue partielle en coupe montrant l'assemblage de la pièce composite et la pièce métallique après l'opération d'estampage selon une exemple de réalisation du procédé objet de l'invention.

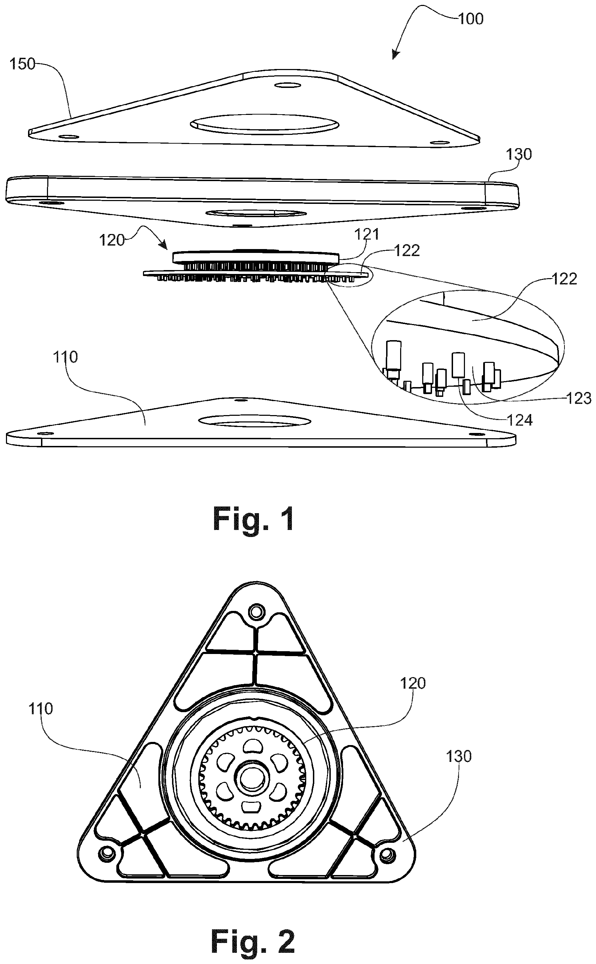

Figure 1, selon un exemple de réalisation, l'ensemble (100) objet de l'invention est adapté à constituer une articulation entre une plaque (110) constituée d'un matériau composite à renfort fibreux dans une matrice constituée d'un polymère thermoplastique, et un gousset (150), consistant par exemple en une plaque métallique. Ledit gousset est lié à la plaque (110) composite par l'intermédiaire d'une pièce (120) métallique qui comporte une interface (121) mécanique pour réaliser des fonctions techniques de l'articulation, telles qu'une liaison pivot ou une indexation angulaire, laquelle partie mécanique est, selon cet exemple de réalisation, fixée par soudage laser à un plateau (122) comprenant une face (123) d'assemblage avec la pièce (110) composite. Ladite face (123) d'assemblage comporte des formes d'accouplement, consistant, selon cet exemple de réalisation, en une pluralité de picots (124) cylindriques sensiblement perpendiculaires à la face d'assemblage. Lors de la réalisation de l'assemblage, lesdits picots (124) pénètrent dans la première pièce (110). Une couche (130), dite couche de verrouillage, constituée d'un matériau comportant une matrice polymère, est surmoulée sur l'assemblage ainsi réalisé. Selon des exemples de réalisation non limitatifs, la pièce (110) composite est constituée d'une stratification de plis de fibres continues de verre de carbone ou de polyamide, dans une matrice polyamide thermoplastique d'une épaisseur typiquement comprise entre 3 mm et 10 mm.

Figure 2, la couche (130) de verrouillage recouvre la pièce (110) composite et la pièce (120) métallique en dehors de l'interface d'assemblage de ces deux pièces. À titre d'exemple non limitatif, la couche (130) de verrouillage est constituée d'un polyamide aliphatique, couramment désigné sous le nom commercial de « *Nylon* », comprenant une charge de fibres de verre courtes et de graphite. Ce matériau est connu sous des noms commerciaux tels que « *Ertalon*® », « *Celstran*® » ou « *Akulon*® ». Ladite couche est réalisée par injection plastique sur l'ensemble assemblé. Selon un exemple d'application, cet ensemble est adapté à la réalisation d'une articulation entre le dossier et l'assise d'un siège de véhicule automobile et son épaisseur totale est limitée à 20 mm. Toujours selon cet exemple d'application, ledit ensemble est apte à soutenir un couple de torsion entre la pièce (120) métallique et la première pièce (110) composite de 3000 N.m.

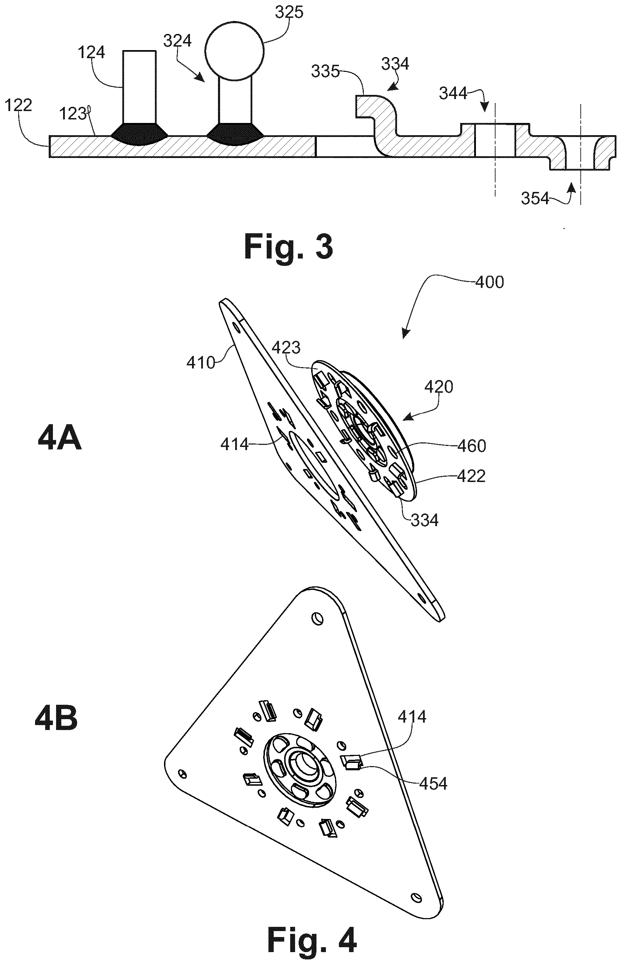

Figure 3, les motifs (124, 324, 334, 344, 354) constituant la forme de d'accouplement de la pièce métallique de l'ensemble objet de l'invention, sont d'un contour fermé selon une section parallèle à la face (123) d'assemblage, c'est-à-dire que le contour de la section dudit motif est entièrement compris sur la face d'assemblage et n'intersecte pas les bords de cette face d'assemblage. Selon un exemple de réalisation le picot (124) cylindrique est rapporté sur le disque (122) en acier par un procédé de soudage de type MIG-MAG dénommé « *Cold Metal Transfer* » ou CMT, décrit par exemple dans le document US 2009 026188. Selon un autre exemple de réalisation, le picot (324) comporte une portion (325), ici une portion sphérique, apte à réaliser un arrêt dans une direction normale à la face (123) d'assemblage. Selon un exemple de réalisation lesdits picots (124, 334) sont en acier avec un diamètre compris entre 0,8 mm et 1,2 mm pour une hauteur comprise entre 3 mm et 5 mm, de sorte que cette hauteur soit inférieure à l'épaisseur de la pièce composite. En répartissant 100 à 200 picots de ce type sur la face (123) d'assemblage d'un disque (122) de 80 mm de diamètre, ledit assemblage entre la première pièce composite et la deuxième pièce supporte un couple à la rupture supérieur à 3000 N.m.

Selon un autre exemple de réalisation, la forme d'accouplement comprend un motif (334) en relief obtenu par poinçonnage-pliage du disque (122), lequel motif comporte, selon cet exemple de réalisation, une portion (335) en retournement formant un arrêt lors de l'assemblage dudit disque (122) avec la pièce composite. Selon un autre exemple de réalisation, la forme d'accouplement comporte un motif (344) en relief constitué d'un trou à bords tombés. Lesdits bords tombés sont obtenus directement lors du poinçonnage ou en rapportant de la matière par usinage additif ou par soudage. Selon un autre exemple de réalisation, la forme d'accouplement comprend un motif (354) en relief constitué d'un trou à bords tombés, dont lesdits bords tombés sont orientés vers la face opposée à la face (123) d'assemblage du disque (122) d'assemblage. Ainsi, lors de l'estampage de la pièce métallique sur la pièce composite, la matrice de la pièce composite se trouvant à l'état non consolidé, le polymère constituant ladite matrice et le premier pli de stratification sont poussés dans ledit trou (354) à bords tombés.

Figure 4, l'estampage n'est pas le mode exclusif d'assemblage de la pièce (420) métallique avec la pièce (410) composite. Ainsi, figure 4A, selon un exemple de réalisation de l'ensemble (400) objet de l'invention, la pièce (410) comporte des lumières (414) découpée par exemple par jet d'eau à haute pression. La pièce (420) métallique comporte sur sa face (123) d'assemblage, des motifs (334) en relief formant des crochets.

Figure 4B, après que lesdits motifs (334) en crochet de la pièce (420) métallique aient été introduits dans les lumières (414) de la pièce composite lesdites pièces sont déplacées relativement l'une à l'autre d'une portion de tour de sorte à effectuer le verrouillage des motifs en crochet dans les lumières (414) de la pièce (410) composite. Puis, le surmoulage est réalisé sur l'ensemble afin de stabiliser l'assemblage.

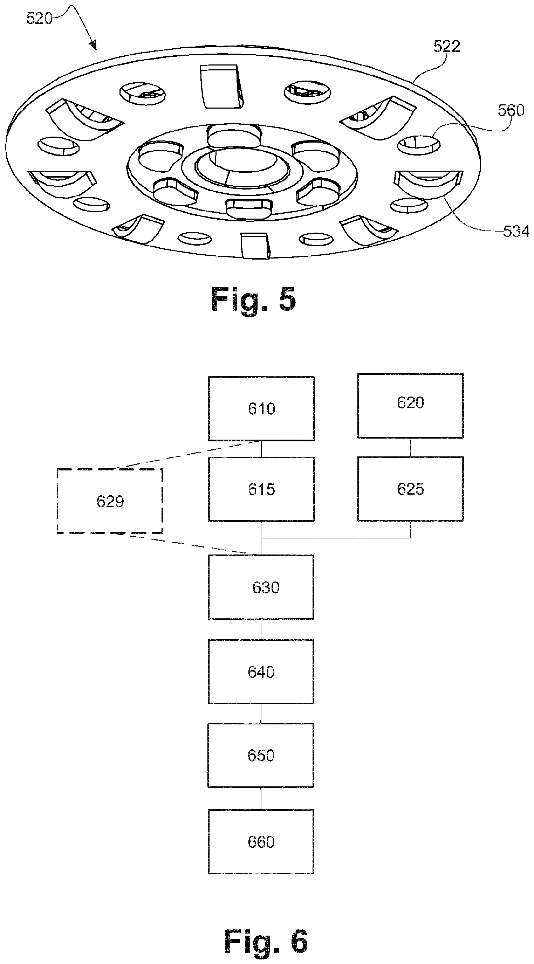

Figure 5, selon une variante du mode de réalisation de la figure 4, les motifs (534) de la forme d'accouplement de la pièce (520) métallique, sont réalisés par découpe-emboutissage et comportent une ouverture crevant le disque (522) d'assemblage et une boucle (535) de verrouillage. La mise en oeuvre de ce mode de réalisation est similaire à celle du mode précédent, à savoir que lesdits motifs (534) sont introduits dans des lumières découpées de la pièce composite et que l'assemblage est stabilisé par le surmoulage de la couche de verrouillage.

Figures 4 et 5, selon ces modes de réalisation, le disque (422, 522) d'assemblage de la pièce métallique comporte, de manière complémentaire aux reliefs (334, 534), des lumières (460, 560) découpées, par exemple par poinçonnage, dans lesquelles le matériau constituant la couche de verrouillage s'introduit lors de l'injection de ladite couche.

Figure 6, selon un exemple de réalisation du procédé objet de l'invention, celui-ci comprend une première étape (610) d'usinage-formage consistant à créer la forme d'accouplement sur la face d'assemblage de la pièce métallique. Cette opération est, par exemple, réalisée par un procédé de type CMT permettant de souder une pluralité de picots sur la face d'assemblage de la pièce métallique sans déformer le disque d'assemblage.

Selon cet exemple de réalisation, la matrice du matériau composite constituant la première pièce de l'ensemble est constituée d'un polymère thermoplastique. Aussi, parallèlement à l'étape (610) d'usinage-formage, au cours d'une étape (620) de fabrication composite, la pièce composite est réalisée. Selon cet exemple de réalisation non limitatif, ladite pièce est tirée en panoplie par détourage au jet d'eau haute pression, d'une plaque consolidée d'un composite à matrice thermoplastique.

Au cours d'une étape (615) de préparation d'outillage, la pièce métallique usinée est placée dans une matrice d'estampage, laquelle matrice d'estampage est, selon cet exemple de réalisation, montée sur la table fixe d'une presse. Selon la température visée d'estampage de la pièce composite, ladite matrice est pourvue d'un système de chauffage par des moyens connus de l'homme du métier.

Au cours d'une étape (625) de transfert, la pièce composite est placée sur un dispositif de transfert, assurant le chauffage de ladite pièce jusqu'à une température proche de la température de fusion de sa matrice polymère en même temps que son acheminement vers la presse. À titre d'exemple non limitatif, la pièce composite est transférée sur un cadre de transfert la maintenant sur sa périphérie et chauffée par son passage sous des panneaux rayonnants.

Au cours d'une étape (630) d'estampage, la pièce métallique et la pièce composite sont assemblées. À cette fin, la pièce composite est placée sur la matrice d'estampage comprenant la pièce métallique, désolidarisée de son cadre de transfert et pressée dans ladite matrice par un poinçon d'estampage de forme appropriée. Ledit poinçon et ladite matrice d'estampage permettent de contrôler la forme de la pièce composite au cours de cette opération. Portée à température élevée, la matrice polymère de la pièce composite se trouve dans un état pâteux et la pièce composite se trouve dans un état décompacté. Ainsi, les déplacements localisés entre les fibres, de même que des glissements interlaminaires à plus grande distance sont possibles, de sorte que les picots de la pièce métallique pénètrent dans la face d'assemblage de la pièce composite sans générer de rupture. La pièce composite est alors refroidie dans la matrice d'estampage, le poinçon et ladite matrice délimitant un volume qui assure le recompactage de ladite pièce. Ainsi, les fibres se resserrent sur lesdits picots au cours de ce compactage et de cette consolidation.

Selon une étape (629) optionnelle, une feuille de colle constituée selon, un exemple de réalisation non limitatif, d'une résine époxyde, est intercalée entre la pièce métallique et la pièce composite avant l'estampage. Portée à la température d'estampage, ladite feuille de colle tend d'une part à réticuler et d'autre part à se lier par diffusion avec la matrice thermoplastique de la pièce composite et à adhérer à la pièce métallique.

Après démoulage, la première et la deuxième pièce de l'ensemble selon l'invention sont placées dans un moule d'injection plastique. Au cours d'une étape (640) de surmoulage, la couche de verrouillage est injectée sur cet ensemble selon la forme que lui confère le moule d'injection.

Au cours d'une étape (650) de démoulage, après refroidissement, l'ensemble est démoulé et fini au cours d'une étape (660) de parachèvement visant notamment à ébavurer l'ensemble et à y réaliser, au besoin, des usinages tels que perçages et détourages, dans le but de l'intégration de l'ensemble objet de l'invention à un dispositif mécanique.

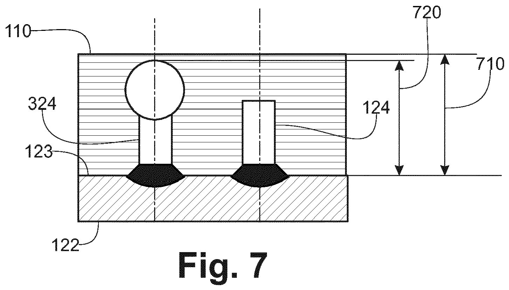

Figure 7, selon un exemple de réalisation du procédé objet de l'invention, les picots (124, 324) de la pièce métallique pénètrent dans la pièce (110) composite sans traverser celle-ci, la hauteur (720) d'extension desdits picots par rapport à la direction normale à la face (123) d'assemblage étant inférieure à l'épaisseur (710) de la pièce (110) composite. Selon un exemple de réalisation non limitatif la hauteur (720) dedits picots (124, 324) est de l'ordre de la moitié de l'épaisseur (710) de la pièce (110) composite.

Les exemples de réalisation de l'ensemble objet de l'invention représentés figures 2 et 4, sont adaptés pour réaliser l'articulation du dossier d'un siège de véhicule automobile par rapport à l'assise dudit siège. Ce type d'articulation est dimensionné notamment par des critères de résistance aux couples générés lors de fortes accélérations constatées en cas d'accident. Ainsi, chaque articulation de ce type doit résister à un couple de 3000 N.m. En comparaison de la solution de l'art antérieur décrite dans le document WO 2010 101874, l'ensemble objet de l'invention permet, à performances égales, un gain de masse de près de 1 kg.

La description ci-avant et les exemples de réalisation montrent que l'invention atteint les objectifs visés, en particulier elle permet l'assemblage de deux pièces de natures différentes selon une interface simple sensiblement plane et soumise au cisaillement selon un procédé de réalisation automatisable et adapté à la production en série. Bien qu'un exemple d'application présente l'utilisation de l'ensemble objet de l'invention pour la réalisation d'un siège, l'homme du métier en adapte les principes à d'autres applications présentant des contraintes et des fonctionnalités de même nature.

## Revendications

1. Procédé pour l'assemblage structural d'une première (110) pièce constituée d'un matériau composite à matrice polymère, avec une seconde (120) pièce, métallique, par deux surfaces en vis-à-vis, dites faces d'assemblage, selon une interface, le procédé comprenant des étapes consistant à :
a. former (610) sur la face d'assemblage de la pièce (110) métallique une forme, dite forme d'accouplement, comprenant deux reliefs (124, 324, 344, 354) distants comportant une extension selon une direction normale à ladite face (123) d'assemblage ;
b. estamper (630) la première (110) pièce avec la seconde (120) pièce sur l'interface d'assemblage, alors que la matrice de la première pièce se trouve dans un état non consolidé ;
c. surmouler sur l'assemblage ainsi réalisé une couche (130), dite de verrouillage, dont la constitution comporte une matrice polymère, ladite couche de verrouillage comprenant une partie en recouvrement sur la première (110) et une partie en recouvrement sur la deuxième (120) pièce et s'opposant au déplacement relatif des deux pièces selon une direction normale à leur interface d'assemblage.

2. Procédé selon la revendication 1, dans lequel la forme d'accouplement pénètre dans la première pièce au cours de l'opération d'estampage sans traverser ladite pièce.

3. Procédé selon les revendications 1 ou 2, dans lequel l'étape a) comprend une opération de soudage ou d'usinage additif sur la face (123) d'assemblage de la pièce métallique.

4. Procédé selon l'une quelconque des revendications 1 à 3, dans lequel l'étape a) comporte une opération de découpage emboutissage de la pièce (110) métallique.

5. Procédé selon l'une quelconque des revendications 1 à 4, comprenant avant l'étape b) une étape consistant à :
d. interposer (629) une couche adhésive entre les faces d'assemblage des deux pièces (110, 120).

6. Procédé selon la revendication 5, dans lequel la couche adhésive est de nature à être activée thermiquement, que l'étape b) est réalisée par thermo-estampage et que la température d'activation de ladite couche adhésive est adaptée pour son activation au cours de ladite opération de thermo-estampage.

7. Ensemble comprenant une première (110, 410) pièce constituée d'un matériau composite à matrice polymère et une deuxième (120, 420, 520) pièce métallique, assemblées selon des faces, dites faces d'assemblage, en vis-à-vis selon une interface, l'ensemble comprenant :
i. la première (110, 410) pièce constituée d'un composite comprenant des fibres de renfort continues dans une matrice thermoplastique ;
ii. la deuxième (120, 420, 520) pièce comportant, sur sa face d'assemblage, une forme d'accouplement, comprenant une pluralité de motifs (124, 324, 334, 344, 354, 534) chaque motif étant d'un contour fermé dans un plan parallèle à la face (123, 423, 523) d'assemblage de ladite pièce et s'étendant selon un direction normale à ladite face d'assemblage, le rapport entre l'extension de ce motif selon une direction normale à la face d'assemblage et le diamètre maximal du contour dudit motif dans un plan parallèle à la face d'assemblage étant inférieur à 5 ;
iii. une couche (130) de matière, dite couche de verrouillage, comportant une partie en recouvrement sur la pièce composite et une partie en recouvrement sur la pièce métallique.

8. Ensemble selon la revendication 7, dans lequel la face d'assemblage de la pièce composite est une surface plane.

9. Ensemble selon la revendication 7 ou la revendication 8, dans lequel l'extension (720) des motifs de la forme d'accouplement selon une direction normale à la face d'assemblage de la deuxième pièce est inférieure à l'épaisseur (710) de la première (110) pièce.

10. Ensemble selon l'une de quelconque des revendications 7 à 9, dans lequel la face (123) d'assemblage de la deuxième pièce comporte une pluralité de motifs (124, 324, 334, 344, 534) s'étendant vers la première pièce selon une direction normale à ladite face d'assemblage.

11. Ensemble selon l'une quelconque des revendications 7 à 10, dans lequel la face d'assemblage de la deuxième pièce comporte une pluralité de motifs (354) s'étendant vers la deuxième pièce selon une direction normale à ladite face d'assemblage.

12. Ensemble selon l'une quelconque des revendications 7 à 11, dans lequel la face d'assemblage de la deuxième pièce comporte une pluralité de motifs (334, 344, 354, 460, 560, 534) comprenant une ouverture crevant ladite face d'assemblage.

13. Ensemble selon l'une quelconque des revendications 7 à 12, dans lequel la face d'assemblage de la deuxième pièce comporte une pluralité de motifs (324, 334, 534) dont la section selon un plan parallèle à la face d'assemblage est variable selon une direction normale à ladite face (123) d'assemblage.

14. Ensemble selon l'une quelconque des revendications 7 à 13, dans lequel la pluralité de motifs de la face d'assemblage comprend un motif comportant une portion (325, 335), dite d'arrêt, distante de l'interface d'assemblage qui s'étend selon une direction parallèle à l'interface d'assemblage, laquelle portion est apte à réaliser un arrêt selon une direction normale audit interface, en coopération avec la première pièce.

15. Ensemble selon l'une quelconque des revendications 7 à 14, dans lequel la pluralité de motifs de la face d'assemblage comprend un motif (325) comportant une portion d'arrêt, laquelle portion d'arrêt est prise à l'intérieur de la pièce (110) composite.

16. Ensemble selon l'une quelconque des revendications 7 à 15, dans lequel la pièce métallique comporte des moyens (121) aptes à réaliser une liaison avec une troisième pièce relativement à ladite pièce métallique.

17. Ensemble selon l'une quelconque des revendications 7 à 16, dans lequel la pièce métallique comporte des moyens (121) aptes a réaliser une liaison pivot indexable d'une troisième pièce relativement à ladite pièce métallique.

18. Siège, notamment pour un véhicule, **caractérisé en ce qu'**il comporte un mécanisme comprenant un ensemble selon l'une quelconque des revendications 7 à 17.

## Patentansprüche

1. Verfahren zur strukturellen Verbindung eines ersten (110) Teils, bestehend aus einem Verbundwerkstoff mit Polymermatrix mit einem zweiten (120), metallischen Teil über zwei gegenüberliegende Oberflächen, die Verbindungsflächen genannt werden, gemäß einer Schnittstelle, wobei das Verfahren Schritte umfasst, die darin bestehen:
a. auf der Verbindungsfläche des metallischen Teils (110) eine Form zu bilden (610), die Kopplungsform genannt wird, zwei beabstandete Reliefs (124, 234, 344, 354) umfassend, die eine Ausdehnung in eine Richtung normal zur Verbindungsfläche (123) umfassen;
b. das erste (110) Teil mit dem zweiten (120) Teil an der Verbindungsschnittstelle zu pressen (630), obwohl sich die Matrix des ersten Teils in einem nicht konsolidierten Zustand befindet;
c. auf der so ausgeführten Verbindung eine Schicht (130), die Verriegelungsschicht genannt wird, abzuformen, deren Beschaffenheit eine Polymermatrix umfasst, wobei die Verriegelungsschicht einen Abschnitt in Überdeckung auf dem ersten (110), und einen Abschnitt in Überdeckung auf dem zweiten (120) Teil umfasst, und sich der relativen Verschiebung der beiden Teile in eine Richtung normal zu deren Verbindungsschnittstelle widersetzt.

2. Verfahren nach Anspruch 1, wobei die Kopplungsform im Laufe des Pressvorgangs in das erste Teil eindringt, ohne das Teil zu durchqueren.

3. Verfahren nach Anspruch 1 oder 2, wobei der Schritt a) einen Schweißvorgang oder zusätzlichen Bearbeitungsvorgang auf der Verbindungsfläche (123) des metallischen Teils umfasst.

4. Verfahren nach einem der Ansprüche 1 bis 3, wobei der Schritt a) einen Tiefziehstanzvorgang des metallischen Teils (110) umfasst.

5. Verfahren nach einem der Ansprüche 1 bis 4, umfassend vor dem Schritt b) einen Schritt der darin besteht:
d. eine Klebeschicht zwischen die Verbindungsflächen der beiden Teile (110, 120) einzufügen (629).

6. Verfahren nach Anspruch 5, wobei die Klebeschicht in der Art ist, thermisch aktiviert zu werden, Schritt b) durch Warmpressen durchgeführt wird und die Aktivierungstemperatur der Klebeschicht für deren Aktivierung im Laufe des Warmpressvorgangs angepasst ist.

7. Einheit, umfassend ein erstes (110, 410) Teil, bestehend aus einem Verbundwerkstoff mit Polymermatrix, und ein zweites (120, 420, 520), metallisches Teil, die an Verbindungsflächen genannten gegenüberliegenden Flächen gemäß einer Schnittstelle verbunden werden, wobei die Einheit umfasst:
i. das erste (110, 410) Teil, bestehend aus einem Verbund, kontinuierliche Verstärkungsfasern in einer thermoplastischen Matrix umfassend;
ii. das zweite (120, 420, 520) Teil, auf seiner Verbindungsfläche eine Kopplungsform umfassend, die eine Vielzahl von Motiven (124, 234, 334, 344, 354, 534) umfasst, wobei jedes Motiv mit einer geschlossenen Kontur in einer Ebene parallel zur Verbindungsfläche (123, 423, 523) des Teils versehen ist, und sich in eine Richtung normal zur Verbindungsfläche erstreckt, wobei das Verhältnis zwischen der Ausdehnung dieses Motivs in eine Richtung normal zur Verbindungsfläche und dem maximalen Durchmesser der Kontur des Motivs in einer Ebene parallel zur Verbindungsfläche kleiner als 5 ist;
iii. eine Materialschicht (130), die Verriegelungsschicht genannt wird, umfassend einen Abschnitt in Überdeckung auf dem Verbundteil und einen Abschnitt in Überdeckung auf dem metallischen Teil.

8. Einheit nach Anspruch 7, wobei die Verbindungsfläche des Verbundteils eine ebene Oberfläche ist.

9. Einheit nach Anspruch 7 oder Anspruch 8, wobei die Ausdehnung (720) der Motive der Kopplungsform in eine Richtung normal zur Verbindungsfläche des zweiten Teils geringer ist als die Dicke (710) des ersten (110) Teils.

10. Einheit nach einem der Ansprüche 7 bis 9, wobei die Verbindungsfläche (123) des zweiten Teils eine Vielzahl von Motiven (124, 324, 334, 344, 534) umfasst, die sich zum ersten Teil in eine Richtung normal zur Verbindungsfläche erstrecken.

11. Einheit nach einem der Ansprüche 7 bis 10, wobei die Verbindungsfläche des zweiten Teils eine Vielzahl von Motiven (354) umfasst, die sich zum zweiten Teil in eine Richtung normal zur Verbindungsfläche erstrecken.

12. Einheit nach einem der Ansprüche 7 bis 11, wobei die Verbindungsfläche des zweiten Teils eine Vielzahl von Motiven (334, 344, 354, 460, 560, 534) umfasst, die eine Öffnung umfassen, die die Verbindungsfläche aufbricht.

13. Einheit nach einem der Ansprüche 7 bis 12, wobei die Verbindungsfläche des zweiten Teils eine Vielzahl von Motiven (324, 334, 534) umfasst, deren Querschnitt in einer Ebene parallel zur Verbindungsfläche in eine Richtung normal zur Verbindungsfläche (123) variabel ist.

14. Einheit nach einem der Ansprüche 7 bis 13, wobei die Vielzahl von Motiven der Verbindungsfläche ein Motiv umfasst, das einen Abschnitt (325, 335) umfasst, der Arretierungsabschnitt genannt wird, beabstandet zur Verbindungsschnittstelle, der sich in eine Richtung parallel zur Verbindungsschnittstelle erstreckt, wobei der Abschnitt imstande ist, in Zusammenwirkung mit dem ersten Teil eine Arretierung in eine Richtung normal zur Schnittstelle durchzuführen.

15. Einheit nach einem der Ansprüche 7 bis 14, wobei die Vielzahl von Motiven der Verbindungsfläche ein Motiv (325) umfasst, das einen Arretierungsabschnitt umfasst, wobei der Arretierungsabschnitt im Inneren des Verbundteils (110) aufgenommen wird.

16. Einheit nach einem der Ansprüche 7 bis 15, wobei das metallische Teil Mittel (121) umfasst, die imstande sind, eine Verknüpfung mit einem dritten Teil relativ zum metallischen Teil durchzuführen.

17. Einheit nach einem der Ansprüche 7 bis 16, wobei das metallische Teil Mittel (121) umfasst, die imstande sind, eine indexierbare Drehzapfenverknüpfung mit einem dritten Teil relativ zum metallischen Teil durchzuführen.

18. Sitz, insbesondere für ein Fahrzeug, **dadurch gekennzeichnet, dass** er einen Mechanismus umfasst, der eine Einheit nach einem der Ansprüche 7 bis 17 umfasst.

## Claims

1. Method for the structural assembly of a first part (110) comprised of a polymer matrix composite material, with a second metal part (120), by two surfaces that face one another, called assembly surfaces, according to an interface, with the method comprising the steps of:
a. forming (610) on the assembly surface of the metal part (110) a shape, called a coupling shape, comprising two separate reliefs (124, 324, 344, 354) comprising an extension according to a direction normal to said assembly surface (123);
b. stamping (630) the first part (110) with the second part (120) on the assembly interface, while the matrix of the first part is in a non-consolidated state;
c. overmoulding on the assembly produced as such a layer (130), called the locking layer, of which the constitution comprises a polymer matrix, said locking layer comprising a portion overlapping on the first (110) and a portion overlapping on the second (120) part and opposing the relative displacement of the two parts according to a direction normal to their assembly interface.

2. Method according to claim 1, wherein the coupling shape penetrates into the first part during the stamping operation without passing through said part.

3. Method according to claims 1 or 2, wherein the step a) comprises a welding or additive machining operation on the assembly surface (123) of the metal part.

4. Method according to any of claims 1 to 3, wherein the step a) comprises a cutting and stamping operation of the metal part (110).

5. Method according to any of claims 1 to 4, comprising before the step b) a step consisting of:
d. inserting (629) an adhesive layer between the assembly surfaces of the two parts (110, 120).

6. Method according to claim 5, wherein the adhesive layer is of a nature to be activated by heat, the step b) is carried out via thermo-stamping and the activation temperature of said adhesive layer is adapted for the activation thereof during said thermo-stamping operation.

7. Ensemble comprising a first part (110, 410) comprised of a polymer matrix composite material and a second metal part (120, 420, 520), assembled according to surfaces, called assembly surfaces, that face one another according to an interface with the assembly comprising:
i. the first part (110, 410) comprised of a composite comprising continuous reinforcement fibres in a thermoplastic matrix;
ii. the second part (120, 420, 520) comprises, on its assembly surface, a coupling shape, comprising a plurality of patterns (124, 324, 334, 344, 354, 534) with each pattern having a contour that is contained within a plane parallel to the assembly surface (123, 423, 523) of said part and extending according to a direction normal to said assembly surface, with the ratio between the extension of this pattern according to a direction normal to the assembly surface and the maximum diameter of the contour of said pattern in a plane parallel to the assembly surface being less than 5;
iii. a layer (130) of material, called the locking layer, comprising a portion overlapping on the composite part and a portion overlapping on the metal part.

8. Assembly according to claim 7, wherein the assembly surface of the composite part is a flat surface.

9. Assembly according to claim 7 or claim 8, wherein the extension (720) of the patterns of the coupling shape according to a direction normal to the assembly surface of the second part is less than the thickness (710) of the first part (110).

10. Assembly according to any of claims 7 to 9, wherein the assembly surface (123) of the second part comprises a plurality of patterns (124, 324, 334, 344, 534) extending to the first part according to a direction normal to said assembly surface.

11. Assembly according to any of claims 7 to 10, wherein the assembly surface of the second part comprises a plurality of patterns (354) extending to the second part according to a direction normal to said assembly surface.

12. Assembly according to any of claims 7 to 11, wherein the assembly surface of the second part comprises a plurality of patterns (334, 344, 354, 460, 560, 534) comprising an opening breaking said assembly surface.

13. Assembly according to any of claims 7 to 12, wherein the assembly surface of the second part comprises a plurality of patterns (324, 334, 534) of which the section along a plane parallel to the assembly surface is variable along a direction normal to said assembly surface (123).

14. Assembly according to any of claims 7 to 13, wherein the plurality of patterns of the assembly surface comprises a pattern comprising a portion (325, 335), called the stop portion, separate from the assembly interface which extends according to a direction parallel to the assembly interface, said portion is able to produce a stop according to a direction normal to said interface, in cooperation with the first part.

15. Assembly according to any of claims 7 to 14, wherein the plurality of patterns of the assembly surface comprises a pattern (325) comprising a stop portion, said stop portion is engaged inside the composite part (110).

16. Assembly according to any of claims 7 to 15, wherein the metal part comprises means (121) able to produce a connection with a third part with respect to said metal part.

17. Assembly according to any of claims 7 to 16, wherein the metal part comprises means (121) able to produce pivot connection that can be indexed of a third part with respect to said metal part.

18. Seat, in particular for a vehicle, **characterised in that** it comprises a mechanism comprising an assembly according to any of claims 7 to 17.
